# EUROPEAN PATENT APPLICATION

(11) **EP 3 288 323 A1**
(43) Date of publication of application: **28.02.2018**
(21) Application number: 15889753.8
(22) Date of filing: 23.11.2015
(51) Int. Cl.: H04W 72/00

(54) **METHOD AND SYSTEM FOR CONTROLLING BASE STATION RESOURCE, BASE STATION AND WIRELESS NETWORK CONTROLLER**

(30) Priority: 20.04.2015 CN 201510188127
(71) Applicant: ZTE Corporation, Shenzhen, Guangdong 518057 (CN)
(72) Inventor: XU, Fei, Shenzhen Guangdong 518057 (CN)
(74) Representative: Lavoix
(86) International application number: PCT/CN2015/095265
(87) International publication number: WO 2016/169270

(57) **Abstract**

Provided are a method and system for controlling a base station resource, a base station and a wireless network controller, which are applied to the field of communications. A base station reports a total quantity of resources of baseband single boards to a wireless network controller, determines when there is a service accessing an actual resource consumption quantity of the baseband single boards consumed by the service, and reports the actual resource consumption quantity to the wireless network controller.

## Description

### TECHNICAL FIELD

The present disclosure relates to the field of communications, and in particular to a method and system for managing resources for a NodeB, a NodeB, and a Radio Network Controller (RNC).

### BACKGROUND

In a Third Generation Partnership Project (3GPP) protocol, a NodeB Application Part (NBAP) signaling protocol is a protocol for an interface between a NodeB and an RNC. A NodeB has to report, to an RNC via a resource status indication and /or an audit response, consumption of resources for an IUB interface between the RNC and the NodeB corresponding to a local cell and /or a group of local cells, including a rule for consuming uplink and /or downlink baseband resources and /or a common channel, a dedicated channel and /or an Enhanced Dedicated Channel (E-DCH) corresponding to an uplink and /or downlink Spreading Factor (SF), for controlling admission on resources for the NodeB.

With increasing processing capacity of baseband boards, there are an increasing number of specifications for baseband boards. An existing Universal Mobile Telecommunications System (UMTS) may be expanded or upgraded with baseband boards of greater processing capacity and different specifications. Considering cost, not every existing baseband board is replaced. Baseband boards of different specifications may have to be configured in a pool of baseband resources for a same NodeB. When baseband boards of different specifications (i.e., baseband boards with different service processing capacity, which consume different resources in processing a same service) are configured for different groups of local cells, consumption of IUB resources may be acquired simply by combining consumption of uplink and downlink resources. When baseband boards of different specifications are configured for a same group of local cells, reporting, to the RNC, consumption of IUB resources as combined consumption of resources by baseband boards of small hardware processing capacity may lead to resource waste due to idle baseband resources for the NodeB. If consumption of IUB resources as combined consumption of resources by baseband boards of large hardware processing capacity is reported to the RNC, access by a user may fail due to lack of baseband resources for the NodeB, even if admission by the RNC succeeds.

### SUMMARY

Embodiments herein provide a method and system for managing resources for a NodeB, a NodeB, and an RNC, capable of avoiding resource waste due to idle baseband resources for a NodeB or access failure due to lack of baseband resources for the NodeB, as caused by inaccurate report of resource consumption in prior art.

According to an embodiment herein, a method for managing resources for a NodeB includes:
reporting, by the NodeB to a Radio Network Controller, RNC, a total amount of resources for a baseband board of the NodeB;
acquiring, by the NodeB, a resource consumption, the resource consumption being an amount of resources for the baseband board, that are consumed by an accessing service; and
reporting, by the NodeB to the RNC, the resource consumption.

The resource consumption may include a resource consumption in setting up a common physical channel and /or a dedicated physical channel.

The acquiring, by the NodeB, a resource consumption may include:
determining, by the NodeB, a baseband board used by the accessing service; and
determining, by the NodeB according to a type of the accessing service and processing capacity of the baseband board used by the accessing service, the resource consumption, as the amount of resources, for the baseband board used by the accessing service, that are consumed by the accessing service.

According to an embodiment herein, a method for managing resources for a NodeB includes:
receiving, by a Radio Network Controller, RNC, a total amount of resources sent by the NodeB;
receiving, by the RNC, a resource consumption sent by the NodeB, the resource consumption being an amount of resources consumed by an accessing service; and
acquiring, by the RNC, an amount of resources available for the NodeB according to the total amount of resources and the resource consumption.

According to an embodiment herein, a method for managing resources for a NodeB includes:
reporting, by the NodeB to a Radio Network Controller, RNC, a total amount of resources for a baseband board of the NodeB;
receiving, by the RNC, the total amount of resources sent by the NodeB;
acquiring, by the NodeB, a resource consumption, the resource consumption being an amount of resources for the baseband board, that are consumed by an accessing service;
reporting, by the NodeB to the RNC, the resource consumption;
receiving, by the RNC, the resource consumption sent by the NodeB; and acquiring, by the RNC, an amount of resources available for the NodeB according to the total amount of resources and the resource consumption.

According to an embodiment herein, a NodeB includes a total-amount reporting module, a consumption acquiring module, and a consumption reporting module.

The total-amount reporting module is arranged for: reporting, to a Radio Network Controller, RNC, a total amount of resources for a baseband board of the NodeB.

The consumption acquiring module is arranged for: acquiring a resource consumption. The resource consumption is an amount of resources for the baseband board, that are consumed by an accessing service.

The consumption reporting module is arranged for: reporting, to the RNC, the resource consumption.

The resource consumption may include a resource consumption in setting up a common physical channel and /or a dedicated physical channel.

The consumption acquiring module may be arranged for:
determining a baseband board used by the accessing service; and
determining, according to a type of the accessing service and processing capacity of the baseband board used by the accessing service, the resource consumption, as the amount of resources, for the baseband board used by the accessing service, that are consumed by the accessing service.

According to an embodiment herein, a Radio Network Controller, RNC, includes a total-amount receiving module, a consumption receiving module, and a resource managing module.

The total-amount receiving module is arranged for: receiving a total amount of resources sent by a NodeB.

The consumption receiving module is arranged for: receiving a resource consumption sent by the NodeB. The resource consumption is an amount of resources consumed by an accessing service.

The resource managing module is arranged for: acquiring an amount of resources available for the NodeB according to the total amount of resources and the resource consumption.

According to an embodiment herein, a system for managing resources for a NodeB includes a NodeB and a Radio Network Controller, RNC.

The NodeB is arranged for: reporting, to the RNC, a total amount of resources for a baseband board of the NodeB.

The RNC is arranged for: receiving the total amount of resources sent by the NodeB.

The NodeB is arranged for: acquiring a resource consumption, the resource consumption being an amount of resources for the baseband board, that are consumed by an accessing service; and reporting, to the RNC, the resource consumption.

The RNC is arranged for: receiving the resource consumption sent by the NodeB; and acquiring an amount of resources available for the NodeB according to the total amount of resources and the resource consumption.

With the method and system for managing resources for a NodeB, the NodeB, and the RNC according to embodiments herein, a NodeB reports, to an RNC, a total amount of resources for a baseband board of the NodeB. The NodeB acquires a resource consumption. The resource consumption is an amount of resources for the baseband board, that are consumed by an accessing service. The NodeB reports, to the RNC, the resource consumption. Compared to existing art, instead of reporting an amount of resources consumed by baseband boards of minimal or maximal processing capacity, the real or actual resource consumption (i.e., the real or actual amount of resources, for the baseband board, that are consumed by the accessing service) is reported to the RNC. Thus, the RNC may learn the real or actual resource consumption, and thereby learn the accurate amount of resources available for a NodeB. The RNC may then allocate an accessing service to a NodeB properly, thereby avoiding a failure of access by a user due to lack of baseband resources for the NodeB even with successful admission by the RNC, when only the amount of resources consumed by baseband boards of maximal processing capacity is reported, as well as avoiding waste of NodeB resources when only the amount of resources consumed by baseband boards of minimal processing capacity is reported.

### BRIEF DESCRIPTION OF THE DRAWINGS

FIG.1 is a flowchart of a method for managing resources for a NodeB according to an embodiment herein.
FIG.2 is a diagram of a scenario where baseband boards of different specifications are configured for different groups of local cells according to an embodiment herein.
FIG.3 is a diagram of a scenario where baseband boards of different specifications are configured for a same group of local cells according to an embodiment herein.
FIG.4 is a flowchart of a method for managing resources for a NodeB according to an embodiment herein.
FIG.5 is a diagram of a structure of a NodeB according to an embodiment herein.
FIG.6 is a diagram of a structure of an RNC according to an embodiment herein.
FIG.7 is a diagram of a structure of a system for managing resources for a NodeB according to an embodiment herein.

### DETAILED DESCRIPTION

To allow a better understanding of a technical problem herein, the present disclosure is further elaborated below with reference to the drawings and embodiments.

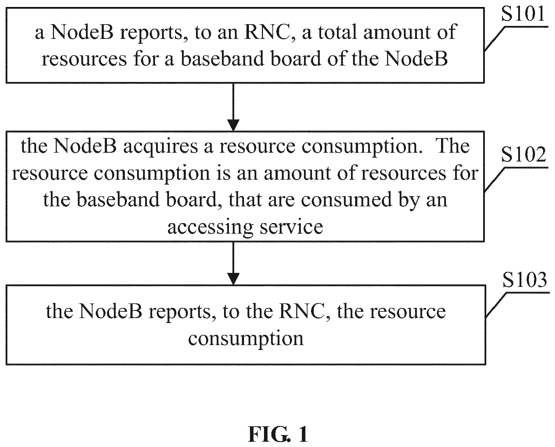

As shown in FIG.1, a method for managing resources for a NodeB according to an embodiment herein includes steps as follows.

In step S101, a NodeB reports, to an RNC, a total amount of resources for a baseband board of the NodeB.

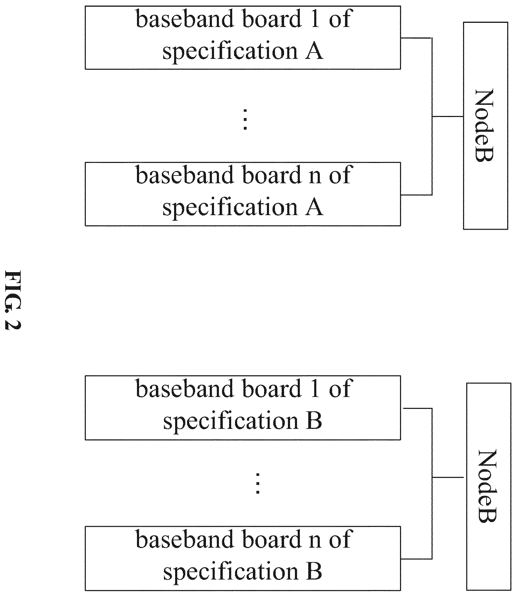

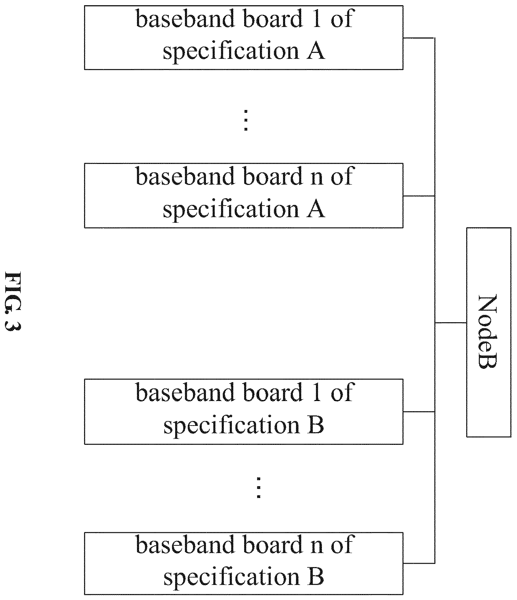

As shown in FIG.2, baseband boards of different specifications may be configured for different groups of local cells. As shown in FIG.3, baseband boards of different specifications may be configured for a same group of local cells. To facilitate managing, by the RNC, access of the NodeB by a service, the NodeB reports, to the RNC, the total amount of resources for any baseband board of the NodeB. A total amount of resources for any baseband board of any specification of a group of local cells may be reported to an RNC via an audit response, a user-plane message, or in another mode. For example, assume that a NodeB is configured with 10 baseband boards, including 5 baseband boards of a specification A of greater processing capacity and 5 baseband boards of a specification B of less processing capacity. Each board may be provided with 100 resources. 20 resources may have to be consumed to process a call service using a baseband board of the specification A. 40 resources may have to be consumed to process the call service using a baseband board of the specification B. The NodeB may inform the RNC of a total amount of 1000 resources. Baseband boards may be configured with the same or different amount of resources.

In step S102, when being accessed by a service, the NodeB acquires a resource consumption. The resource consumption is an amount of resources for the baseband board, that are consumed by the accessing service.

As shown in FIG.2, baseband boards of different specifications may be configured for different groups of local cells. Baseband boards in a group of local cells may be of a same specification, with identical hardware processing capacity and therefore identical SF-based baseband-board resource models (identical rules for consuming a total amount of uplink and /or downlink baseband resources and /or a common channel, a dedicated channel and /or an E-DCH corresponding to an uplink and /or downlink SF). The NodeB may acquire consumption of IUB resources simply by combining consumption of uplink and downlink resources. As shown in FIG.3, baseband boards of different specifications may be configured for a same group of local cells. The baseband boards in the group of local cells may be of different specifications and different hardware processing capacity, with different SF-based baseband-board resource models (different rules for consuming a total amount of uplink and /or downlink baseband resources and /or a common channel, a dedicated channel and /or an E-DCH corresponding to an uplink and /or downlink SF). The NodeB may not acquire consumption of resources for a logic IUB interface simply by combining consumption of uplink and downlink resources. One may have to consider a rule for consuming a channel of a service grade by data of a type to be reported to the RNC. Note that the resource consumption may be an amount of resources for the baseband board, that are actually consumed in processing the accessing service, namely an accurate amount of resources consumed for processing the service, instead of a conventional amount consumed as determined according to processing capacity of a baseband board. In the example, 20 resources may have to be consumed to process a call service using a baseband board of the specification A. 40 resources may have to be consumed to process the call service using a baseband board of the specification B. The NodeB may inform the RNC of an amount of resources used. If a baseband board of the specification A is used for the call service, the amount of resources consumed by the service is 20.

In step S103, the NodeB reports, to the RNC, the resource consumption.

The NodeB may report, to the RNC, the amount of resources for the baseband board of the NodeB, that are consumed by the accessing service, such that the RNC may manage resources for the NodeB, and perform resource allocation and service processing. The RNC receives the resource consumption sent by the NodeB. The RNC acquires an amount of resources available for the NodeB according to the total amount of resources and the resource consumption. In the example, the RNC may learn that the total amount of resources for the NodeB is 1000, 20 of which are consumed for processing the call service. The RNC may acquire that 980 resources are available for the NodeB.

The resource consumption may be a resource consumption in setting up a common physical channel and /or a dedicated physical channel. The NodeB may acquire the resource consumption as follows. The NodeB may determine a baseband board used by the accessing service. The NodeB may determine, according to a type of the accessing service and processing capacity of the baseband board used by the accessing service, the resource consumption, as the amount of resources, for the baseband board used by the accessing service, that are consumed by the accessing service. In steps S102 and S103, an amount of resources consumed by a resource-consuming channel may be included in a response for setting up the resource-consuming channel. Having received the response, the RNC may calibrate the amount of resources consumed (i.e., those consumed by the group of local cells) according to the resource consumption included in the response signaling. The NodeB may report, via response signaling through an IUB interface, an amount of resources consumed in setting up an ordinary downlink common physical channel by the RNC, which may be part of the resource consumption. The NodeB may inform the RNC, in a common transport channel setup response to the RNC via IUB-interface signaling (including but not limited to IUB signaling and /or a user-plane message), of the amount of resources consumed in setting up the common physical channel by the RNC. The common physical channel may be a Secondary Common Control Physical Channel (SCCPCH), a Physical Random Access Channel (PRACH), etc. The RNC may calibrate the amount of resources consumed by the group of local cells according to the amount of resources consumed by the common physical channel in the response signaling. The NodeB may further report, via response signaling through an IUB interface, an amount of resources consumed in setting up a downlink dedicated physical channel dedicated to an ordinary service by the RNC, which may be part of the resource consumption. The NodeB may report, in a radio link setup response, a radio link addition response, a radio link reconfiguration ready response, and/or the like, returned to the RNC, for example via IUB-interface signaling (including but not limited to IUB signaling and /or a user-plane message), the amount of resources consumed in setting up the dedicated physical channel, such that the amount of resources consumed by the group of local cells may be calibrated accordingly.

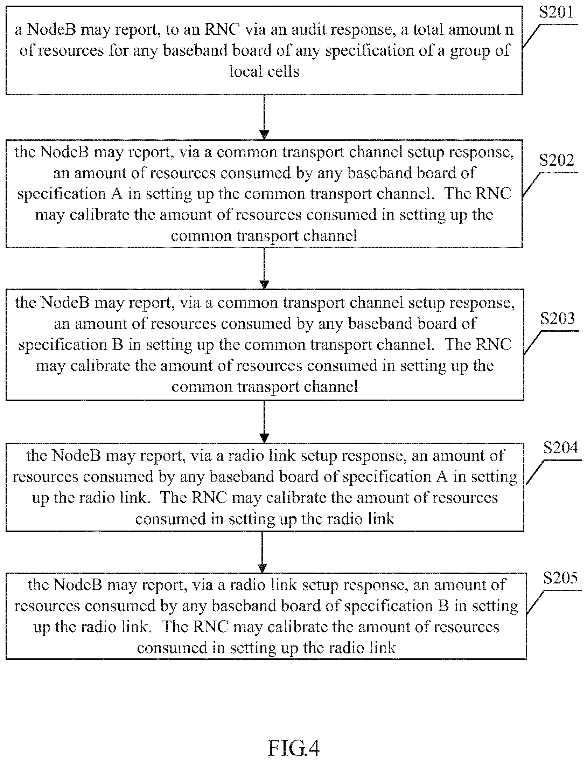

As shown in FIG.4, a method for managing resources for a NodeB according to an embodiment herein may include steps as follows.

In step S201, a NodeB may report, to an RNC via an audit response, a total amount n of resources for any baseband board of any specification of a group of local cells.

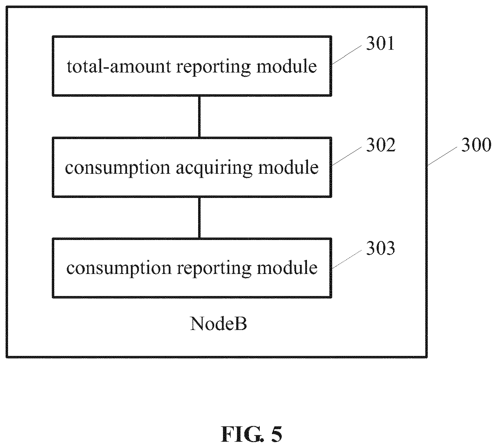

In step S202, the NodeB may receive public signaling, i.e., a common transport channel setup request. A common transport channel may be set up on a baseband board of the specification A in a group of local cells as shown in FIG.5. The baseband board of the specification A may include, in a common transport channel setup response to the RNC according to an SF of a type of a service required by the common transport channel setup request and /or processing capacity of the baseband board of the specification A, an amount a1 of resources consumed. The RNC may then calibrate the amount of resources consumed by the group of local cells using the amount of resources consumed by the NodeB. Having set up the common transport channel, the RNC may modify an amount of resources remaining available for the group of local cells managed by the NodeB to be n-a1. An extended interface field adopted for report to the RNC may be as follows.

**TCommonTransportChannelSetupResponseMsg→-extElem1**

| | | |
|---|---|---|
| data | 2 bytes | fdd_RealConsumption (0-65534) |

In step S203, the NodeB may once again receive public signaling, i.e., a common transport channel setup request. A common transport channel may be set up on a baseband board of the specification B in the group of local cells as shown in FIG.5. The baseband board of the specification B may include, in a common transport channel setup response to the RNC according to an SF of a type of a service required by the common transport channel setup request and /or processing capacity of the baseband board of the specification B, an amount b1 of resources consumed. The RNC may then calibrate the amount of resources consumed by the group of local cells using the amount of resources consumed by the NodeB. Having set up the common transport channel, the RNC may modify an amount of resources remaining available for the group of local cells managed by the NodeB to be n-a1-b1.

In step S204, the NodeB may receive dedicated signaling, i.e., a radio link setup request. A radio link may be set up on a baseband board of the specification A in the group of local cells as shown in FIG.5. The baseband board of the specification A may include, in a radio link setup response to the RNC according to an SF of a type of a service required by the radio link setup request and /or processing capacity of the baseband board of the specification A, an amount a2 of resources consumed. The RNC may then calibrate the amount of resources consumed by the group of local cells using the amount of resources consumed by the NodeB. Having set up the radio link, the RNC may modify an amount of resources remaining available for the group of local cells managed by the NodeB to be n-a1-b1-a2. An extended interface field adopted for report to the RNC may be as follows.

**TRadioLinkSetupResponseFDDMsg→extElem1**

| | | |
|---|---|---|
| data | 2 bytes | fdd_RealConsumption (0-65534) |

In step S205, the NodeB may receive dedicated signaling, i.e., a radio link setup request. A radio link may be set up on a baseband board of the specification B in the group of local cells as shown in FIG.5. The baseband board of the specification B may include, in a radio link setup response to the RNC according to an SF of a type of a service required by the radio link setup request and /or processing capacity of the baseband board of the specification B, an amount b2 of resources consumed. The RNC may then calibrate the amount of resources consumed by the group of local cells using the amount of resources consumed by the NodeB. Having set up the radio link, the RNC may modify an amount of resources remaining available for the group of local cells managed by the NodeB to be n-a1-b1-a2-b2.

With the steps, an RNC may be informed of accurate amounts of resources consumed by baseband boards of different specifications in a group of local cells.

As shown in FIG.5, a NodeB 300 according to an embodiment herein includes a total-amount reporting module 301, a consumption acquiring module 302, and a consumption reporting module 303. The total-amount reporting module 301 is arranged for: reporting, to an RNC 400, a total amount of resources for a baseband board of the NodeB. The consumption acquiring module 302 is arranged for: acquiring a resource consumption. The resource consumption is an amount of resources for the baseband board, that are consumed by an accessing service. The consumption reporting module 303 is arranged for: reporting, to the RNC 400, the resource consumption. The resource consumption may be a resource consumption in setting up a common physical channel and /or a dedicated physical channel. The consumption acquiring module may be arranged for: determining a baseband board used by the accessing service; and determining, according to a type of the accessing service and processing capacity of the baseband board used by the accessing service, the resource consumption, as the amount of resources, for the baseband board used by the accessing service, that are consumed by the accessing service.

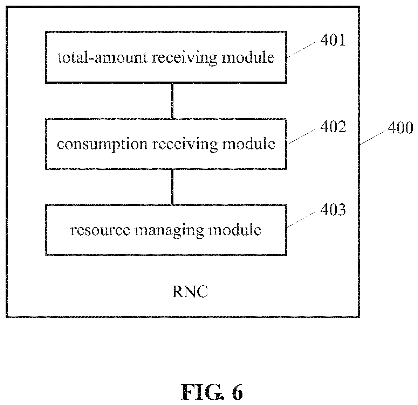

As shown in FIG.6, an RNC 400 according to an embodiment herein includes a total-amount receiving module 401, a consumption receiving module 402, and a resource managing module 403. The total-amount receiving module 401 is arranged for: receiving a total amount of resources sent by a NodeB 300. The consumption receiving module 402 is arranged for: receiving a resource consumption sent by the NodeB 300. The resource consumption is an amount of resources consumed by an accessing service. The resource managing module 403 is arranged for: acquiring an amount of resources available for the NodeB 400 according to the total amount of resources and the resource consumption.

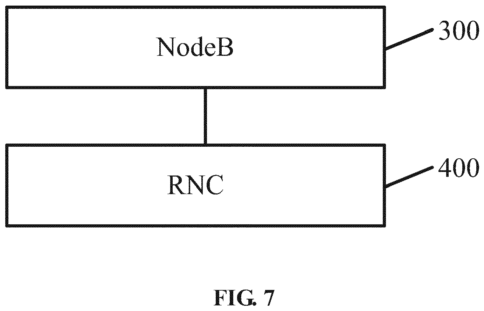

As shown in FIG.7, a system for managing resources for a NodeB 300 according to an embodiment herein includes a NodeB 300 and an RNC 400. The NodeB 300 is arranged for: reporting, to the RNC 400, a total amount of resources for a baseband board of the NodeB. The RNC 400 is arranged for: receiving the total amount of resources sent by the NodeB 300. The NodeB 300 is arranged for: acquiring a resource consumption, the resource consumption being an amount of resources for the baseband board, that are consumed by an accessing service; and reporting, to the RNC 400, the resource consumption. The RNC 400 is arranged for: receiving the resource consumption sent by the NodeB 300; and acquiring an amount of resources available for the NodeB 300 according to the total amount of resources and the resource consumption.

Those skilled in the art may understand that all or part of the steps of the method may be implemented by instructing a related hardware through a program. The program may be stored in a (non-transitory) computer-readable storage medium. The computer-readable storage medium may be Read Only Memory (ROM), a magnetic disk, a CD, and/or the like. All or part of the steps in an aforementioned embodiment may be implemented using one or more Integrated Circuits. A step/unit or module in an aforementioned embodiment may be implemented in form of hardware or a software functional module. The present disclosure is not limited to any specific combination of hardware and software.

The embodiments are merely for explaining a technical solution herein, and are not intended to limit the present disclosure. The present disclosure is elaborated with the embodiments. Those skilled in the art may make a modification and /or equivalent replacement to a technical solution herein without departing form the spirit and scope of the technical solution herein. Any such modification and /or equivalent replacement should be covered by the claims herein.

### Industrial Applicability

Embodiments herein disclose a method and system for managing resources for a NodeB, a NodeB, and an RNC. A NodeB reports, to an RNC, a total amount of resources for a baseband board of the NodeB. The NodeB acquires a resource consumption. The resource consumption is an amount of resources for the baseband board, that are consumed by an accessing service. The NodeB reports, to the RNC, the resource consumption. Compared to existing art, instead of reporting an amount of resources consumed by baseband boards of minimal or maximal processing capacity, the real or actual resource consumption (i.e., the real or actual amount of resources, for the baseband board, that are consumed by the accessing service) is reported to the RNC. Thus, the RNC may learn the real or actual resource consumption, and thereby learn the accurate amount of resources available for a NodeB. The RNC may then allocate an accessing service to a NodeB properly, thereby avoiding a failure of access by a user due to lack of baseband resources for the NodeB even with successful admission by the RNC, when only the amount of resources consumed by baseband boards of maximal processing capacity is reported, as well as avoiding waste of NodeB resources when only the amount of resources consumed by baseband boards of minimal processing capacity is reported.

## Claims

1. A method for managing resources for a NodeB, **characterised in that** the method comprises:
reporting, by the NodeB to a Radio Network Controller, RNC, a total amount of resources for a baseband board of the NodeB;
acquiring, by the NodeB, a resource consumption, the resource consumption being an amount of resources for the baseband board, that are consumed by an accessing service; and
reporting, by the NodeB to the RNC, the resource consumption.

2. The method according to claim 1, wherein the resource consumption comprises a resource consumption in setting up a common physical channel and /or a dedicated physical channel.

3. The method according to claim 1 or 2, wherein the acquiring, by the NodeB, a resource consumption comprises:
determining, by the NodeB, a baseband board used by the accessing service; and
determining, by the NodeB according to a type of the accessing service and processing capacity of the baseband board used by the accessing service, the resource consumption, as the amount of resources, for the baseband board used by the accessing service, that are consumed by the accessing service.

4. A method for managing resources for a NodeB, **characterised in that** the method comprises:
receiving, by a Radio Network Controller, RNC, a total amount of resources sent by the NodeB;
receiving, by the RNC, a resource consumption sent by the NodeB, the resource consumption being an amount of resources consumed by an accessing service; and
acquiring, by the RNC, an amount of resources available for the NodeB according to the total amount of resources and the resource consumption.

5. A method for managing resources for a NodeB, **characterised in that** the method comprises:
reporting, by the NodeB to a Radio Network Controller, RNC, a total amount of resources for a baseband board of the NodeB;
receiving, by the RNC, the total amount of resources sent by the NodeB;
acquiring, by the NodeB, a resource consumption, the resource consumption being an amount of resources for the baseband board, that are consumed by an accessing service;
reporting, by the NodeB to the RNC, the resource consumption;
receiving, by the RNC, the resource consumption sent by the NodeB; and
acquiring, by the RNC, an amount of resources available for the NodeB according to the total amount of resources and the resource consumption.

6. A NodeB, **characterised in that** the NodeB comprises a total-amount reporting module, a consumption acquiring module, and a consumption reporting module,
wherein the total-amount reporting module is arranged for: reporting, to a Radio Network Controller, RNC, a total amount of resources for a baseband board of the NodeB,
wherein the consumption acquiring module is arranged for: acquiring a resource consumption, the resource consumption being an amount of resources for the baseband board, that are consumed by an accessing service,
wherein the consumption reporting module is arranged for: reporting, to the RNC, the resource consumption.

7. The NodeB according to claim 6, wherein the resource consumption comprises a resource consumption in setting up a common physical channel and /or a dedicated physical channel.

8. The NodeB according to claim 6 or 7, wherein the consumption acquiring module is arranged for:
determining a baseband board used by the accessing service; and
determining, according to a type of the accessing service and processing capacity of the baseband board used by the accessing service, the resource consumption, as the amount of resources, for the baseband board used by the accessing service, that are consumed by the accessing service.

9. A Radio Network Controller, RNC, **characterised in that** the RNC comprises a total-amount receiving module, a consumption receiving module, and a resource managing module,
wherein the total-amount receiving module is arranged for: receiving a total amount of resources sent by a NodeB,
wherein the consumption receiving module is arranged for: receiving a resource consumption sent by the NodeB, the resource consumption being an amount of resources consumed by an accessing service,
wherein the resource managing module is arranged for: acquiring an amount of resources available for the NodeB according to the total amount of resources and the resource consumption.

10. A system for managing resources for a NodeB, **characterised in that** the system comprises a NodeB and a Radio Network Controller, RNC,
wherein the NodeB is arranged for: reporting, to the RNC, a total amount of resources for a baseband board of the NodeB,
wherein the RNC is arranged for: receiving the total amount of resources sent by the NodeB,
wherein the NodeB is arranged for: acquiring a resource consumption, the resource consumption being an amount of resources for the baseband board, that are consumed by an accessing service; and reporting, to the RNC, the resource consumption,
wherein the RNC is arranged for: receiving the resource consumption sent by the NodeB; and acquiring an amount of resources available for the NodeB according to the total amount of resources and the resource consumption.
